(19)

Europäisches
Patentamt
European
Patent Office
Office européen
des brevets

(11) **EP 2 768 154 A1**

(12) **EUROPEAN PATENT APPLICATION**

(43) Date of publication:
**20.08.2014 Bulletin 2014/34**

(51) Int Cl.:
***H04B 7/04*** *(2006.01)*     ***H04B 7/06*** *(2006.01)*

(21) Application number: **13290029.1**

(22) Date of filing: **15.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
 • **Weber, Andreas
   74251 Lehrensteinsfeld (DE)**

 • **Boccardi, Federico
   20063 Cernusco sul Naviglio (MI) (IT)**
 • **Bakker, Hajo
   71735 Eberdingen (DE)**

(74) Representative: **DREISS Patentanwälte PartG
mbB
Patentanwälte
Postfach 10 37 62
70032 Stuttgart (DE)**

Remarks:
Amended claims in accordance with Rule 137(2)
EPC.

(54) **Receiver and method of operating a receiver**

(57) The invention relates to a method of operating a receiver (10) of a cellular communications system, particularly a receiver of a terminal of a cellular communications system, wherein said receiver (10) is configured to receive (200) data transmissions from a transmitter (20) which is configured to perform precoding (100), preferably codebook precoding based on a codebook (CB) commonly known by said receiver (10) and said transmitter (20), wherein said receiver (10) determines (210) and signals (212) to the transmitter (20) an optimum codebook entry (CB_opt) from said codebook (CB), wherein the receiver (10) further determines (214) an error indicator ($\Delta$) which characterizes a difference between said optimum codebook entry (CB_opt) and an ideal precoding matrix (PM_ideal), and wherein the receiver (10) signals the error indicator ($\Delta$) to the transmitter (20).

**Fig. 1**

EP 2 768 154 A1

## Description

## Field of the invention

The invention relates to a method of operating a receiver of a cellular communications system, particularly a receiver of a terminal of a cellular communications system, wherein said receiver is configured to receive data transmissions from a transmitter which is configured to perform precoding, preferably codebook precoding based on a codebook commonly known by said receiver and said transmitter.

The invention further relates to a receiver of a cellular communications system.

The invention also relates to a method of operating a transmitter of a cellular communications system, particularly a transmitter of a base station of a cellular communications system, and to a transmitter.

## Background

Codebook precoding is e.g. used in cellular communications systems such as according to the LTE (long term evolution) standard. The LTE communications standard is defined by 3GPP (3rd Generation Partnership Project) Specification series 3GPP TS 36.xxx, wherein 3GPP TS 36.211 relates to Physical Channels and Modulation. For further explanations in this application, the term "LTE standard" generally refers to the specification series 3GPP TS 36.xxx, particularly to LTE Release 8. An example of codebook precoding as defined by the LTE standard is given in chapter 6.3.4.2.3 of 3GPP TS 36.211 V8.7.0 (2009-05).

It is an object of the present invention to provide an improved transmitter and receiver and improved methods of operating said devices which enable a more precise precoding.

## Summary

According to the present invention, regarding the abovementioned method of operating a receiver, this object is achieved in that said receiver determines and signals to the transmitter an optimum codebook entry from said codebook, wherein the receiver further determines an error indicator which characterizes a difference between said optimum codebook entry and an ideal precoding matrix, and wherein the receiver signals the error indicator to the transmitter.

The optimum codebook entry is a specific precoding matrix comprised in the commonly known codebook, which has been determined by the receiver to effect the best precoding possible with respect to all precoding matrices, i.e. codebook entries, of said commonly known codebook. In contrast, the ideal precoding matrix corresponds to a precoding matrix which would yield the theoretically, i.e. overall, best precoding. Usually, there is a difference between the optimum codebook entry and the ideal precoding matrix, because a codebook of a real implementation only comprises a limited number of different codebook entries, i.e. precoding matrices. Thus, the optimum codebook entry only represents an approximation for the ideal precoding, which is represented by the ideal precoding matrix.

Obviously, the more different precoding matrices are comprised within the commonly known codebook, the better an approximation of the ideal precoding may be achieved. However, this increases a signalling effort in terms of the amount of data required for signalling a specific one of the many different precoding matrices. E.g., for a codebook which comprises four entries, e.g. precoding matrices, two bit are sufficient for signalling the optimum codebook entry, whereas eight bit would be required for a codebook comprising 256 different entries.

The approach according to the embodiments advantageously enables to employ a conventional codebook precoding approach, such as e.g. proposed by the LTE standard, which has the advantage of requiring comparatively few signalling information. To address the disadvantage of the - usually non-vanishing - discrepancy or difference between the optimum codebook entry and the ideal precoding matrix, the embodiments propose to determine said error indicator which characterizes a difference between said optimum codebook entry and an ideal precoding matrix, and to signal, by means of the receiver, the error indicator to the transmitter. Knowledge of the error indicator at the transmitter inter alia enables improved precoding and/or scheduling.

In this context, it is to be emphasized that the principle according to the embodiments may generally be implemented in any transmitting or receiving device of a, preferably cellular, communications system. Insofar, the receiver according to the embodiments may - according to a preferred variant - be implemented in a terminal of a mobile communications system, while a transmitter according to the embodiments may - according to a preferred variant - be implemented in a base station of a mobile communications system, and vice versa. Further, the principle according to the embodiments is not limited to cellular communications systems such as e.g. according to LTE (release 8) or LTE-Advanced (release 9, 10) (4G, and/or 5G), but may also be applied to other systems that enable codebook precoding. For example, peer-to-peer type communications based on codebook precoding may also be enhanced by the principle according to the embodiments.

Moreover, the terms "receiver" and "transmitter" are not to be understood in a limiting fashion. E.g., a terminal of a, preferably cellular, communications system according to the embodiments may, in addition to the receiver according to the embodiments, also comprise a transmitter, which may e.g. be used for uplink control and/or data transmissions to a base station. Such transmitter of the terminal may e.g. be used for signaling the optimum codebook entry and/or the error indicator to a base station serving the terminal, wherein said base station may e.g. comprise a transmitter according to the embodiments.

Although according to some embodiments, a static codebook may be provided for the transmitter and/or receiver, it is also possible according to further embodiments that a variable codebook (the elements of which may e.g. be adapted over time) is used. Generally, any form of precoding may be used together with the principle according to the embodiments. Particularly, instead of codebook precoding, a modified precoding may also be used, e.g. for MU-MIMO, CoMP, etc.

According to a further variant, it is also possible that an entity of a communications network (terminal, base station, relay station or the like) comprises both a receiver and a transmitter according to the embodiments, or only one of those elements.

Generally, the transmitter and/or receiver according to the embodiments may also be implemented as part of a transceiver device, which may e.g. be integrated to a terminal, base station, relay station or the like.

Advantageously, since the receiver according to the embodiments further, i.e. in addition to an optimum codebook entry, determines an error indicator which characterizes a difference between said optimum codebook entry and an ideal precoding matrix, and since the receiver signals the error indicator to the transmitter, i.e. a base station serving a terminal comprising the receiver according to the embodiments, the base station can use this enhanced feedback information to improve precoding and/or scheduling and the like. Still further, by evaluating the error indicator, the base station can assess a discrepancy between the codebook precoding as enabled by using the conventional codebook and its optimum codebook entry, and between a theoretical optimum precoding enabled by the ideal precoding matrix.

The receiver (which may e.g. be integrated in a terminal) may e.g. determine the ideal precoding based on common reference symbols transmitted periodically by the transmitter. The receiver may then calculate the optimal phases of the precoding so that the combined receive signal level is maximized, i.e. so that the phase shifts introduced by the channel are compensated. This precoding type is also known as conjugate beamforming.

According to an embodiment, said error indicator is determined depending on at least one statistical quantity of said difference between said optimum codebook entry and an ideal precoding matrix, which enables to assess not only current properties of a communications channel between transmitter and receiver, but also slower changes and trends, which advantageously enable extrapolation and the like.

According to a further embodiment, said error indicator is signalled to the transmitter at a second rate which is lower than a first rate that is used for signalling the optimum codebook entry to the transmitter, whereby an additional signaling effort - as opposed to the signaling for conventional codebook precoding - is reduced.

According to a further embodiment, said receiver determines at least one protocol delay associated with data transmissions between said receiver and said transmitter for determining said error indicator. For this purpose it is beneficial if the receiver has knowledge about the protocol delay, i.e. the delay between feedback of precoding (for example the optimum codebook entry) and a first application of the fed back precoding by the transmitter of e.g. the base station. Thus, the delay between determination of the precoding matrix and its application may be taken into consideration leading to a more precise measurement of the error and thus to a better decision on transmission method, transmission rank, link adaptation, and even precoding (i.e., even more precise precoding).

A further solution to the object of the present invention is given by a receiver according to claim 5. Advantageous embodiments are proposed in the dependent claims.

Yet another solution to the object of the present invention is given by a method of operating a transmitter according to claim 9. Said transmitter is configured to perform precoding, preferably codebook precoding based on a codebook commonly known by a receiver and said transmitter for data transmissions to said receiver, wherein said transmitter receives, and preferably also, uses for said precoding an optimum codebook entry from said codebook which is signaled by said receiver, wherein the transmitter receives from said receiver an error indicator which characterizes a difference between said optimum codebook entry and an ideal precoding matrix. Instead of using said optimum codebook entry from said codebook which is signaled by said receiver, the transmitter may also use a codebook entry derived therefrom or any other codebook entry or precoding matrix (e.g., not necessarily an existing codebook entry).

According to an embodiment, said transmitter uses the error indicator for precoding, particularly by modifying the optimum codebook entry and/or further codebook entries depending on said error indicator.

According to a further embodiment said transmitter uses the error indicator for at least one of:

- optimizing a, preferably dynamic, switching between single user, SU,/multiple user, MU, multiple input multiple output, MIMO, and/or coordinated multipoint, COMP, transmissions,

- performing a correction of precoding weights of the codebook,

- modifying a user pairing/scheduling algorithm,

- modifying a link adaptation, e.g. by optimizing the modulation and coding scheme, MCS, to be used for transmissions to the receiver,

- determining a signal to noise ratio, SINR,

- determining a throughput.

Combinations thereof are also possible.

A further solution to the object of the present invention is given by a transmitter according to claim 12. Advantageous embodiments are proposed in the dependent claims.

**Brief description of the figures**

Further features, aspects and advantages of the present invention are given in the following detailed description with reference to the drawings in which:

Fig. 1      schematically depicts a transmitter and a receiver according to an embodiment,

Fig. 2a     schematically depicts a codebook according to an embodiment,

Fig. 2b     schematically depicts a determination of an error indicator according to an embodiment,

Fig. 3a     schematically depicts a simplified flow-chart of a method according to an embodiment,

Fig. 3b     schematically depicts a simplified flow-chart of a further method according to an embodiment, and

Fig. 4      schematically depicts a simplified flow-chart of a further method according to an embodiment.

**Description of the embodiments**

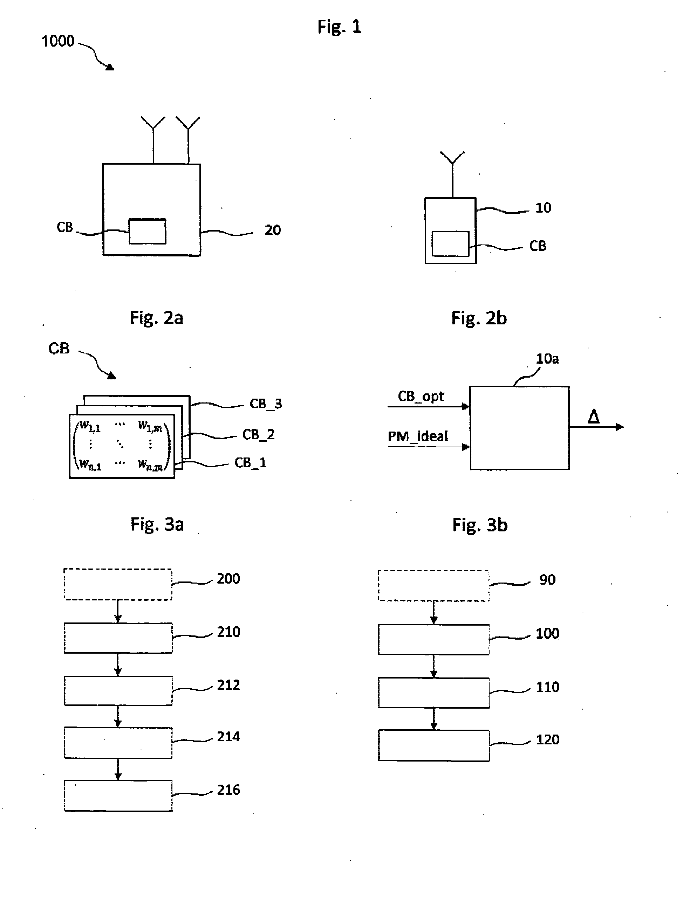

Fig. 1 schematically depicts a receiver 10 and a transmitter 20 according to an embodiment. Receiver 10 is for example comprised within a mobile terminal of a cellular communications network 1000, whereas the transmitter 20 is for example comprised within a base station of said cellular communications network. The transmitter 20 and receiver 10 may e.g. operate according to the LTE or LTE Advanced standard, but are not limited thereto. Generally, the transmitter 20 and/or receiver 10 according to the embodiments may also be implemented as part of a transceiver device of the terminal and/or or base station.

For transmitting data to the receiver 10, the transmitter 20 performs codebook precoding in a per se known manner. As an example, if u represents a vector of data symbols to be sent from the transmitter 20 to the receiver 10, a precoding matrix G from a codebook CB (Fig. 1) known to both transmitter 20 and receiver 10 is chosen, and a signal **s** to be transmitted is determined by the transmitter 20 according to **s** = **Gu** (equation 1), so that a received signal r = **HGu** + **noise** (equation 2) is obtained, wherein **H** is a channel matrix for the respective transmission, and wherein n represents a noise vector.

Fig. 2a schematically depicts a codebook CB as used in the devices 10, 20, wherein only three codebook entries CB_1, CB_2, CB_3 are shown for the sake of clarity. Typical codebook sizes may e.g. range from 2 to 16 codebook entries or more. As is well known, each codebook entry CB_1, CB_2, CB_3 is e.g. represented in matrix form ("precoding matrix"), which is depicted by Fig. 2a for the first codebook entry CB_1. I.e., a precoding matrix may e.g. comprise n*m many matrix elements $w_{1,1}, .., w_{n,m}$. Depending on a number of transmit antennas and data streams (layers) to be transmitted, the precoding matrix may also comprise vector form, thus only comprising n many elements.

Examples for codebooks used for precoding according to LTE standard rev. 8 are e.g. defined by chapter 6.3.4.2.3 of 3GPP TS 36.211 V8.7.0 (2009-05), cf. Table 6.3.4.2.3-1.

Since the precoding matrices CB_1, CB_2, CB_3 as comprised in a shared common codebook CB represent a finite discrete subset of all possible precoding matrices, usually there is a difference between the optimum codebook entry as can be chosen from the existing codebook CB and an ideal precoding matrix which would effect ideal precoding according the predetermined criteria employed for the codebook precoding. This difference may also be interpreted as a quantization error. The criteria based on which the optimum codebook entry from an existing codebook CB is chosen (and the ideal precoding matrix is determined) is not subject of the present invention. However, an ideal precoding matrix may e.g. be determined by conjugate beamforming, i.e. so that the channel phase shifts are compensated at the receive antenna elements. Doing so will maximize the receive signal level at the receive antenna elements.

Thus, the optimum codebook entry chosen from codebook CB for codebook precoding only represents an approximation for the ideal precoding, which is represented by the ideal precoding matrix. Hence, conventional codebook-based precoding only offers reduced precision due to quantization errors and further errors (finite precision of numeric calculations, delay between generation and application of best precoding ..) as compared to precoding with the ideal precoding matrix.

In view of this, according to the embodiments, it is proposed to enhance existing codebook precoding techniques. One exemplary embodiment for such enhancement of codebook precoding is explained below with reference to the flow-chart of Fig. 3a. In a first step 200, at the receiver 10 (Fig. 1) one or more data transmissions (which may comprise control data and/or user data) are received. For example, the received data may comprise pilot or reference signals known by transmitter 20 and receiver 10 thus allowing channel measurements to be performed by the receiver 10 to determine a channel matrix.

After this, in step 210 (Fig. 3a), the receiver 10 determines according to some criteria - and preferably by using the determined channel matrix - an optimum codebook entry CB_opt from said codebook CB (Fig. 1), wherein e.g. CB_opt = CB_3.

The optimum codebook entry can be defined by e.g. multiplying the channel matrix with all codebook entries (according to eq. 2) and to select the entry with the highest expected receive signal level at the receive antenna elements. Another option is to choose the codebook entry that is most similar to the ideal precoding. This can be decided e.g. based on the scalar product between codebook entries and ideal normalized precoding.

After determination 210 of the optimum codebook entry CB_opt, the receiver 10 signals 212 to the transmitter 20 said optimum codebook entry CB_opt, which may e.g. be accomplished by transmitting control information that represents an index value pointing to said optimum codebook entry CB_opt within said shared codebook CB. For example, if said shared codebook CB comprises 16 entries, four bit are sufficient for signaling a specific codebook entry as the optimum codebook entry CB_opt to the transmitter 20.

Upon receipt of this optimum codebook entry CB_opt, the transmitter could e.g. perform conventional codebook precoding by using the optimum codebook entry CB_opt signaled by the receiver or terminal 10 in step 212. For example, to again refer to the above equations, for conventional precoding at this stage, the transmitter 20 could evaluate the equation 1 above with **G** corresponding to the optimum codebook entry CB_opt signaled by the receiver, **s = (CB_opt)u.**

However, to improve precoding precision, advantageously, according to the embodiments, the receiver 10 in step 214 further determines an error indicator which characterizes a difference between said optimum codebook entry CB_opt and an ideal precoding matrix PM_ideal, and in step 216 signals the error indicator to the transmitter 20. This enables the transmitter 20 to assess a degree of discrepancy between the optimum codebook entry to be used for precoding and the ideal precoding matrix PM_ideal, which would yield better precoding results in terms of said predetermined criteria for precoding.

Fig. 2b schematically depicts the determination 214 of the error indicator $\Delta$ according to an embodiment. A function block 10a, which may e.g. be implemented within a processing unit (e.g. microcontroller or digital signal processor, DSP) of the receiver 10, receives as input signals both the optimum codebook entry CB_opt and the ideal precoding matrix PM_ideal. Depending on these input parameters, the function block 10a determines the error indicator $\Delta$.

As explained above, the error indicator $\Delta$ characterizes a difference between said optimum codebook entry CB_opt and an ideal precoding matrix PM_ideal. According to the embodiments, this "difference" between said optimum codebook entry CB_opt and an ideal precoding matrix PM_ideal may be characterized in a plurality of ways.

According to a first variant, the difference between said optimum codebook entry CB_opt and an ideal precoding matrix PM_ideal may simply be a matrix difference as obtained by subtracting the matrices CB_opt, PM_ideal from each other, e.g. $\Delta$ = CB_opt - PM_ideal, for example on a per-matrix-element basis so that the error indicator $\Delta$ also represents a matrix the single matrix elements of which correspond to the differences between the respective matrix elements of the input matrices CB_opt, PM_ideal.

According to a further variant, a ratio of the respective matrix elements of the input matrices CB_opt, PM_ideal may also be considered to constitute the matrix elements of the error indicator $\Delta$, and the like.

According to a particularly preferred embodiment, the error indicator $\Delta$ is determined depending on at least one statistical quantity of said difference between said optimum codebook entry CB_opt and an ideal precoding matrix PM_ideal. E.g., for a plurality of, preferably subsequent, cycles in which an optimum codebook entry CB_opt is determined by the receiver 10, a respective matrix difference $\Delta 1$ $\Delta 2$, $\Delta 3$ is determined, wherein $\Delta 1$ e.g. represents a difference matrix between the optimum codebook entry CB_opt for a first cycle and the ideal precoding matrix, wherein $\Delta 2$ e.g. represents a difference matrix between the optimum codebook entry CB_opt for a preferably subsequent second cycle and the ideal precoding matrix, and the like. After this, the error indicator $\Delta$ is determined as a "mean value" of the various difference matrices $\Delta 1$, $\Delta 2$, $\Delta 3$. I.e., each matrix element of the error indicator $\Delta$ represents a mean value of a difference between respective matrix elements of the input matrices for the respective processing cycle. Likewise, a standard deviation or further statistical parameters characterizing the error indicator may be derived and/or signaled to the transmitter. The standard deviation of the error may be represented by the root mean square (RMS) of the absolute deviations between all corresponding matrix elements of optimum codebook entry and optimal precoding. In this case a single scalar error value is transferred to the transmitter. The standard deviation of the error may preferably be normalized to the mean absolute value of a codebook matrix element (in a typical scenario all elements of all matrices with the same number of layers n may have the same amplitude).

According to a further preferred embodiment, said error indicator is signaled 216 (Fig. 3a) to the transmitter 20 at a second rate which is lower than a first rate that is used for signaling 212 the optimum codebook entry CB_opt to the transmitter 20. Thus, advantageously, the transmitter 20 may still make use of the error indicator Δ, while on the other hand additional feedback from the receiver 10 to the transmitter 20 for conveying said error indicator Δ is reduced.

According to a further preferred embodiment, said receiver 10 determines and/or considers at least one protocol delay associated with data transmissions between said receiver 10 and said transmitter 20 for determining said error indicator, which accounts for a time delay between the provisioning of the optimum codebook entry CB_opt and/or the error indicator Δ by the receiver 10 and a point in time where the transmitter 20 may first make use of said optimum codebook entry CB_opt and/or the error indicator Δ. Usually, as a consequence of transmission and/or protocol delays, the transmitter 20 will only be able to evaluate and/or use the received optimum codebook entry CB_opt and/or the error indicator Δ after said delays. If the receiver 10 according to an embodiment takes into consideration these delays, e.g. a better decision on MCS (link adaptation), the switching between different transmit algorithms (SU, MU, CoMP), etc. may be achieved.

A further aspect of the embodiments is given by a method of operating a transmitter 20 (Fig. 1) of a, preferably cellular, communications system, particularly a transmitter of a base station of a cellular communications system.

Fig. 3b schematically depicts a simplified flow-chart of a corresponding method of operating such transmitter 20 according to an embodiment. In step 100, said transmitter 20 (Fig. 1) performs codebook precoding based on a codebook CB commonly known by the receiver 10 and said transmitter 20 for data transmissions (user and/or control data) to said receiver 10. Prior to performing said precoding 100, said transmitter may optionally receive 90 an optimum codebook entry CB_opt from said codebook CB which is signaled by said receiver 10. For example, the respective signaling 212 of the receiver 10 to the transmitter 20 may only comprise a few bits sufficient to represent an index to the commonly known codebook CB, said index denoting the optimum codebook entry CB_opt. After receiving 90 said optimum codebook entry CB_opt, or a pointer thereto, the transmitter 20 may use said optimum codebook entry CB_opt for precoding 100.

In step 110, the transmitter 20 receives from said receiver 10 the error indicator Δ which characterizes a difference between said optimum codebook entry CB_opt and an ideal precoding matrix PM_ideal as already explained above.

After this, according to a further embodiment, said transmitter 20 uses 120 the error indicator Δ for precoding, particularly by modifying the optimum codebook entry CB_opt depending on said error indicator Δ. It is to be noted that step 120 is not necessarily to be performed to take advantage of the error indicator Δ provided by the receiver 10 according to the embodiments. On the contrary, using said error indicator Δ - in addition to the convention optimum codebook entry CB_opt - for precoding, is only one of several variants according to the embodiments.

Instead, after receiving 110 said error indicator Δ, the transmitter 20 could e.g. take some other measure making use of said error indicator Δ. According to a preferred embodiment, said transmitter 20 uses the error indicator Δ for at least one of:

- optimizing a, preferably dynamic, switching between single user, SU,/multiple user, MU, multiple input multiple output, MIMO, and/or coordinated multipoint, COMP, transmissions,

- performing a correction of precoding weights of the codebook CB (i.e., by modifying the optimum codebook entry CB_opt depending on information comprised by said error indicator Δ),

- modifying a user pairing/scheduling algorithm,

- modifying a link adaptation, e.g. by optimizing the modulation and coding scheme, MCS, to be used for transmissions to the receiver 10,

- determining a signal to noise ratio, SINR,

- determining a throughput.

I.e., the transmitter 20 is not required to alter its precoding for future transmissions to the receiver 10 using the error indicator Δ. Rather, the transmitter 20 may use the error indicator Δ to control an MCS for one or more receivers 10 or terminals, respectively, or the like. Combinations of the aforementioned measures are also possible.

With respect to the flow-chart of Fig. 3b it is also to be noted that the sequence of steps as depicted therein and explained above is not binding. Rather, the reception of "conventional" codebook information, e.g. in the form of the optimum codebook entry CB_opt (or an index pointing at this entry), and/or the reception of the error indicator Δ according to the embodiments, may be performed in another sequence or even in parallel (or semi-parallel) to each other. This also holds true for the steps 200 to 216 of the flow chart of Fig. 3a. However, it is preferred that the error indicator Δ is provided by the receiver 10 at a lower temporal rate than the optimum codebook entry used for codebook precoding.

According to a further embodiment, the codebook precoding using the optimum codebook entry could e.g. be performed according to existing communications standards such as e.g. the LTE rel. 8 standard (or rel. 9, 10). In this case, the optimum codebook entry could be signaled to the transmitter 20 by using a so-called precoding matrix indicator (PMI). Additionally, the error indicator Δ according to the embodiments may be provided to the transmitter 20 to enable refining the precoding and/or perform enhanced SINR and/or throughput evaluations and/or switching between transmit methods and/or take some other measure as listed above or combinations thereof.

Below, an application scenario is explained wherein the principle according to the embodiments may advantageously be employed. It is assumed that transmitter 20 of Fig. 1 is a transmitter of a base station, and that receiver 10 is comprised in a terminal ("mobile") served by said base station. For MU-MIMO (multi-user MIMO) transmissions, e.g. from the transmitter 20 to multiple receivers 10, zero forcing (ZF) may be applied in order to find a set of precoding matrices (short: "precodings") for a set of m many co-scheduled (i.e., scheduled for the same time and frequency resources) mobiles that generates zero crosstalk between the different parallel transmissions to these mobiles. Due to measurement errors, mobile velocity, delays, and quantization errors, the residual crosstalk will be greater than zero. This residual crosstalk can advantageously be estimated based on the error indicator Δ according to the embodiments that is received at the base station as feedback from the mobile(s).

In a further embodiment, only a quantization error may be considered. It is assumed that a specific mobile with index k feeds back a precoding matrix $w_a$ as a vector of size $s$ (e.g., according to the present embodiment, precoding is effected by vectors, e.g. due to considering only a single data stream), said size s corresponding to the number of transmit antenna elements at the base station (e.g., transmitter 20). It is further assumed that the conjugate complex of this precoding matrix $w_a$ corresponds to the effective MISO (multiple input single ouput) channel: $H_{\text{eff}} = w_a^H$ .

According to the present embodiment, the mobile terminal determines an ideal precoding vector $w_{ideal}$. The applicable precoding vector (corresponding to the optimum codebook entry of the embodiments explained above) - due to constraints of the codebook CB - is $w_a$. The difference $w_{ideal}$ - $w_a$ delivers s - 1 many complex error values, if both vectors are normalized so that the first coefficient is e.g. 1 + 0j. This difference $w_{ideal}$-$w_a$ represents an error indicator Δ in the sense of the embodiments, which in the present case is of vector type.

According to a further embodiment, the absolute values of the errors (presently the error vector $w_{ideal}$-$w_a$) can be used to calculate a statistic. The mean error $\sigma_{err,k}$ for the specific mobile terminal k is fed back to the base station on a periodical basis. In another embodiment, a discrete representation of the cumulative density function (cdf) of the quantization error could be fed back to the base station. Based on such error feedback, the base station could gather a statistic about the error.

For processing at the base station it is assumed that the elements of the error vector $\Theta_k$ of any mobile "$k$" are i.i.d. (independently identically distributed) with $CN(0, \sigma_{err,k})$ . Out of the individual error vectors of the various mobile terminals, an error matrix $\Theta$ may be composed: $\Theta=[\Theta_1,\Theta_2,...,\Theta_k]^H$

With the assumption that the conjugate complex precoding corresponds to the effective MISO channel matrix the real effective MISO channel of mobile k is: $H_{\text{eff},k}^{real} = H_{\text{eff},k} + \Theta_k^H$

The average relative crosstalk, i.e. the expectation value of the crosstalk $Exp\{I_{XT,k}/S_{MU,k}\}$ from all mobiles $j \neq k$ towards mobile $k$ is: $Exp\{I_{XT,k} / S_{MU,k}\} = \sum_{j=1, j \neq k}^{m} \sigma_{err,j}^2 \left\| w_{a,j} \right\|^2 \Big/ \left| H_{\text{eff},k}^H \cdot w_{a,k} \right|^2$

Considering the calculated crosstalk, more accurate predictions of SINR and throughput may be determined and it can better be decided if a mobile should be served in multiple user (MU) or single user (SU) mode.

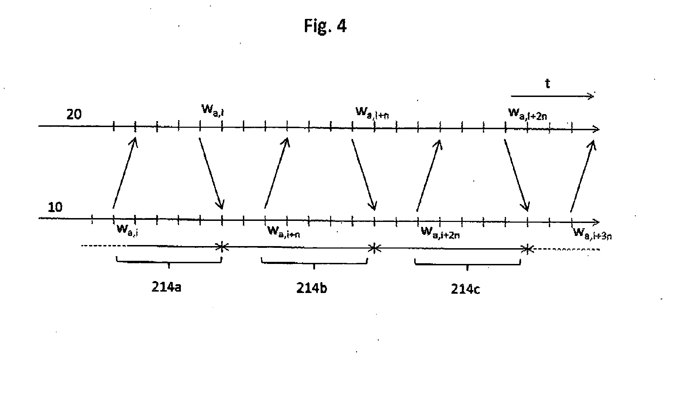

According to a further embodiment, the mobile terminal or its receiver 10, respectively, considers protocol delays in order to calculate the error indicator, cf. Fig. 4, which depicts a time axis both for the terminal 10 ("receiver") and the base station 20 ("transmitter"). The arrows pointing upwards in Fig. 4 represent signaling of optimum codebook entry and/or error indicator to the transmitter 20 of the base station, whereas the arrows pointing downwards in Fig. 4 represent downlink transmissions to the receiver 10 of the terminal, where a respective precoding using a previously received optimum codebook entry and/or error indicator is applied. For this purpose it is beneficial if the mobile terminal 10 knows the protocol delay, i.e. the delay between feedback of precoding to the transmitter 20 and the first application of the precoding by the transmitter 20 of the base station. For the calculation of the error, the mobile considers the right precoding $w_{a,i}$, i.e. the precoding that the base station would use for SU transmission during subframe i. More specifically, in a first phase 214a the mobile 10 considers the precoding $w_{a,i}$ (more precisely, the precoding matrix $w_{a,i}$) and the base station 20 uses this precoding matrix $w_{a,i}$ , whereas in subsequent phases 214b, 214c further precoding matrices $w_{a,i+n}$, $w_{a,i+2n}$, .. are used.

In a further embodiment the feedback of the error indicator is used in order to decide on a CoMP cluster and on CoMP mode. For this purpose, the receiver 10 of a mobile terminal measures channel matrices to all cells that potentially are part of a CoMP cluster for this mobile terminal. Considering the necessary quantization of the channel information, the quantization error can be calculated by the mobile for every link to every candidate cell. Delay information can optionally also be considered as in the previous embodiment. The central scheduler for the cluster considers the error indicators for the corresponding links in order to decide on a cluster and to optimize the set of co-scheduled mobiles for this cluster.

In a further embodiment, the error indicator can be used in order to find better precoding matrices, i.e. for refining existing precoding matrices. When using e.g. Signal to Leakage plus Noise (SLNR) optimization, the error value can be considered for the calculation of precoding vectors.

In a further embodiment, the error indicator is associated to a particular cluster. Example: if the statistic of the error at user "i" in cell "A" is considered, when cell A is clustered with cell B, the average of the error could be much lower. So this could be exploited, both at the terminal side 10 and at the base station side 20. For example, different statistics could be maintained at the base station side, with respect to the different clusterings.

The principle according to the embodiments, which inter alia enables more precise precoding matrix feedback, may advantageously be applied to performance enhancing techniques like MU-MIMO or CoMP, where it is essential to have high quality channel feedback.

The principle according to the embodiments advantageously enables to avoid providing higher resolution to the feedback, by either using a larger number of feedback bits or sending refined versions of the channel feedback via hierarchical feedback and the corresponding drawbacks such as highly increased overhead required in the uplink channel.

The principle according to the embodiments advantageously also enables improvements regarding more precise measurement of the error and thus enables to make a better decision on a transmission method, transmission rank, link adaptation, and even precoding (i.e., even more precise precoding) , also in case of mobility and non-vanishing protocol delays.

The principle according to the embodiments advantageously enables to save feedback bandwidth using an error indicator that describes how accurate the channel feedback - based on a codebook CB - is with respect to e.g. precoding or channel matrices. Furthermore, the embodiments may be used to describe the ageing of feedback information. The principle according to the embodiments advantageously supports an accurate decision about transmission modes, e.g. SU-MIMO, MU-MIMO, or CoMP by allowing better predictions about SINR and throughput. Also, in contrast to a finer feedback granularity for precoding or channel matrices, feedback bandwidth is saved and the mobile velocity is considered.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGS., including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. Method of operating a receiver (10) of a, preferably cellular, communications system, particularly a receiver of a terminal of a cellular communications system, wherein said receiver (10) is configured to receive (200) data transmissions from a transmitter (20) which is configured to perform precoding (100), preferably codebook precoding based on a codebook (CB) commonly known by said receiver (10) and said transmitter (20), wherein said receiver (10) determines (210) and signals (212) to the transmitter (20) an optimum codebook entry (CB_opt) from said codebook (CB), wherein the receiver (10) further determines (214) an error indicator ($\Delta$) which characterizes a difference between said optimum codebook entry (CB_opt) and an ideal precoding matrix (PM_ideal), and wherein the receiver (10) signals (216) the error indicator ($\Delta$) to the transmitter (20).

2. Method according to claim 1, wherein said error indicator ($\Delta$) is determined depending on at least one statistical quantity of said difference between said optimum codebook entry (CB_opt) and an ideal precoding matrix (PM_ideal).

3. Method according to one of the preceding claims, wherein said error indicator is signalled to the transmitter (20) at a second rate which is lower than a first rate that is used for signalling the optimum codebook entry (CB_opt) to the transmitter (20).

4. Method according to one of the preceding claims, wherein said receiver (10) determines at least one protocol delay associated with data transmissions between said receiver (10) and said transmitter (20) for determining said error indicator.

5. Receiver (10) of a, preferably cellular, communications system, particularly a receiver of a terminal of a cellular communications system, wherein said receiver (10) is configured to receive (200) data transmissions from a transmitter (20) which is configured to perform precoding (100), preferably codebook precoding based on a codebook (CB) commonly known by said receiver (10) and said transmitter (20), wherein said receiver (10) is configured to determine (210) and signal (212) to the transmitter (20) an optimum codebook entry (CB_opt) from said codebook (CB), wherein the receiver (10) is further configured to determine (214) an error indicator ($\Delta$) which characterizes a difference between said optimum codebook entry (CB_opt) and an ideal precoding matrix (PM_ideal), and wherein the receiver (10) is configured to signal the error indicator ($\Delta$) to the transmitter (20).

6. Receiver (10) according to claim 5, wherein said receiver (10) is configured to determine said error indicator ($\Delta$) depending on at least one statistical quantity of said difference between said optimum codebook entry (CB_opt) and an ideal precoding matrix (PM_ideal).

7. Receiver (10) according to one of the claims 5 to 6, wherein said receiver (10) is configured to signal said error indicator to the transmitter (20) at a second rate which is lower than a first rate that is used for signalling the optimum codebook entry (CB_opt) to the transmitter (20).

8. Receiver (10) according to one of the claims 5 to 7, wherein said receiver (10) is configured to determine at least one protocol delay associated with data transmissions between said receiver (10) and said transmitter (20) for determining said error indicator.

9. Method of operating a transmitter (20) of a, preferably cellular, communications system, particularly a transmitter of a base station of a cellular communications system, wherein said transmitter (10) is configured to perform precoding (100), preferably codebook precoding based on a codebook (CB) commonly known by a receiver (10) and said transmitter (20) for data transmissions to said receiver (10), wherein said transmitter receives (90), and preferably uses, for said precoding an optimum codebook entry (CB_opt) from said codebook (CB) which is signalled by said receiver (10), wherein the transmitter (20) receives (110) from said receiver (10) an error indicator ($\Delta$) which characterizes a difference between said optimum codebook entry (CB_opt) and an ideal precoding matrix (PM_ideal).

10. Method according to claim 9, wherein said transmitter (20) uses (120) the error indicator ($\Delta$) for precoding, particularly by modifying the optimum codebook entry (CB_opt) depending on said error indicator ($\Delta$).

11. Method according to one of the claims 9 to 10, wherein said transmitter (20) uses the error indicator (A) for at least one of:

- optimizing a, preferably dynamic, switching between single user, SU,/multiple user, MU, multiple input multiple output, MIMO, and/or coordinated multipoint, COMP, transmissions,
- performing a correction of precoding weights of the codebook (CB),
- modifying a user pairing/scheduling algorithm,
- modifying a link adaptation, e.g. by optimizing the modulation and coding scheme, MCS, to be used for transmissions to the receiver (10)
- determining a signal to noise ratio, SINR,
- determining a throughput.

12. Transmitter (20) of a, preferably cellular, communications system, particularly a transmitter of a base station of a cellular communications system, wherein said transmitter (10) is configured to perform precoding (100), preferably codebook precoding based on a codebook (CB) commonly known by a receiver (10) and said transmitter (20) for data transmissions to said receiver (10), wherein said transmitter is configured to receive, and preferably use, for said precoding an optimum codebook entry (CB_opt) from said codebook (CB) which is signalled by said receiver (10), wherein the transmitter (20) is configured to receive from said receiver (10) an error indicator ($\Delta$) which characterizes a difference between said optimum codebook entry (CB_opt) and an ideal precoding matrix (PM_ideal).

13. Transmitter (20) according to claim 12, wherein said transmitter (20) is configured to use the error indicator ($\Delta$) for precoding, particularly by modifying the optimum codebook entry (CB_opt) depending on said error indicator ($\Delta$).

14. Transmitter (20) according to one of the claims 12 to 13, wherein said transmitter (20) is configured to use the error indicator ($\Delta$) for at least one of:

- optimizing a, preferably dynamic, switching between single user, SU,/multiple user, MU, multiple input multiple output, MIMO, and/or coordinated multipoint, COMP, transmissions,
- performing a correction of precoding weights of the codebook (CB),
- modifying a user pairing/scheduling algorithm,
- modifying a link adaptation, e.g. by optimizing the modulation and coding scheme, MCS, to be used for transmissions to the receiver (10)
- determining a signal to noise ratio, SINR,
- determining a throughput.

**Amended claims in accordance with Rule 137(2) EPC.**

1. Method of operating a receiver (10) of a, preferably cellular, communications system, particularly a receiver of a terminal of a cellular communications system, wherein said receiver (10) is configured to receive (200) data transmissions from a transmitter (20) which is configured to perform precoding (100), preferably codebook precoding based on a codebook (CB) commonly known by said receiver (10) and said transmitter (20), wherein said receiver (10) determines (210) and signals (212) to the transmitter (20) an optimum codebook entry (CB_opt) from said codebook (CB), wherein the receiver (10) further determines (214) an error indicator ($\Delta$) which characterizes a difference between said optimum codebook entry (CB_opt) and an ideal precoding matrix (PM_ideal), and wherein the receiver (10) signals (216) the error indicator ($\Delta$) to the transmitter (20)
, wherein said error indicator ($\Delta$) is determined depending on at least one statistical quantity of said difference between said optimum codebook entry (CB_opt) and an ideal precoding matrix (PM_ideal).

2. Method according to claim 1, wherein said error indicator is signalled to the transmitter (20) at a second rate which is lower than a first rate that is used for signalling the optimum codebook entry (CB_opt) to the transmitter (20).

**3.** Method according to one of the preceding claims, wherein said receiver (10) determines at least one protocol delay associated with data transmissions between said receiver (10) and said transmitter (20) for determining said error indicator.

**4.** Receiver (10) of a, preferably cellular, communications system, particularly a receiver of a terminal of a cellular communications system, wherein said receiver (10) is configured to receive (200) data transmissions from a transmitter (20) which is configured to perform precoding (100), preferably codebook precoding based on a codebook (CB) commonly known by said receiver (10) and said transmitter (20), wherein said receiver (10) is configured to determine (210) and signal (212) to the transmitter (20) an optimum codebook entry (CB_opt) from said codebook (CB), wherein the receiver (10) is further configured to determine (214) an error indicator ($\Delta$) which characterizes a difference between said optimum codebook entry (CB_opt) and an ideal precoding matrix (PM_ideal), and wherein the receiver (10) is configured to signal the error indicator ($\Delta$) to the transmitter (20) , wherein said receiver (10) is configured to determine said error indicator ($\Delta$) depending on at least one statistical quantity of said difference between said optimum codebook entry (CB_opt) and an ideal precoding matrix (PM_ideal).

**5.** Receiver (10) according to claim 4, wherein said receiver (10) is configured to signal said error indicator to the transmitter (20) at a second rate which is lower than a first rate that is used for signalling the optimum codebook entry (CB_opt) to the transmitter (20).

**6.** Receiver (10) according to one of the claims 4 to 5, wherein said receiver (10) is configured to determine at least one protocol delay associated with data transmissions between said receiver (10) and said transmitter (20) for determining said error indicator.

**7.** Method of operating a transmitter (20) of a, preferably cellular, communications system, particularly a transmitter of a base station of a cellular communications system, wherein said transmitter (10) is configured to perform precoding (100), preferably codebook precoding based on a codebook (CB) commonly known by a receiver (10) and said transmitter (20) for data transmissions to said receiver (10), wherein said transmitter receives (90), and preferably uses, for said precoding an optimum codebook entry (CB_opt) from said codebook (CB) which is signalled by said receiver (10), wherein the transmitter (20) receives (110) from said receiver (10) an error indicator ($\Delta$) which characterizes a difference between said optimum codebook entry (CB_opt) and an ideal precoding matrix (PM_ideal), wherein said error indicator ($\Delta$) is determined depending on at least one statistical quantity of said difference between said optimum codebook entry (CB_opt) and an ideal precoding matrix (PM_ideal).

**8.** Method according to claim 7, wherein said transmitter (20) uses (120) the error indicator ($\Delta$) for precoding, particularly by modifying the optimum codebook entry (CB_opt) depending on said error indicator ($\Delta$).

**9.** Method according to one of the claims 7 to 8, wherein said transmitter (20) uses the error indicator ($\Delta$) for at least one of:

- optimizing a, preferably dynamic, switching between single user, SU,/multiple user, MU, multiple input multiple output, MIMO, and/or coordinated multipoint, COMP, transmissions,
- performing a correction of precoding weights of the codebook (CB),
- modifying a user pairing/scheduling algorithm,
- modifying a link adaptation, e.g. by optimizing the modulation and coding scheme, MCS, to be used for transmissions to the receiver (10)
- determining a signal to noise ratio, SINR,
- determining a throughput.

**10.** Transmitter (20) of a, preferably cellular, communications system, particularly a transmitter of a base station of a cellular communications system, wherein said transmitter (10) is configured to perform precoding (100), preferably codebook precoding based on a codebook (CB) commonly known by a receiver (10) and said transmitter (20) for data transmissions to said receiver (10), wherein said transmitter is configured to receive, and preferably use, for said precoding an optimum codebook entry (CB_opt) from said codebook (CB) which is signalled by said receiver (10), wherein the transmitter (20) is configured to receive from said receiver (10) an error indicator ($\Delta$) which characterizes a difference between said optimum codebook entry (CB_opt) and an ideal precoding matrix (PM_ideal), wherein said error indicator ($\Delta$) is determined depending on at least one statistical quantity of said difference between said optimum codebook entry (CB_opt) and an ideal precoding matrix (PM_ideal).

**11.** Transmitter (20) according to claim 10, wherein said transmitter (20) is configured to use the error indicator (Δ) for precoding, particularly by modifying the optimum codebook entry (CB_opt) depending on said error indicator (Δ).

**12.** Transmitter (20) according to one of the claims 10 to 11, wherein said transmitter (20) is configured to use the error indicator (Δ) for at least one of:

- optimizing a, preferably dynamic, switching between single user, SU,/multiple user, MU, multiple input multiple output, MIMO, and/or coordinated multipoint, COMP, transmissions,
- performing a correction of precoding weights of the codebook (CB),
- modifying a user pairing/scheduling algorithm,
- modifying a link adaptation, e.g. by optimizing the modulation and coding scheme, MCS, to be used for transmissions to the receiver (10)
- determining a signal to noise ratio, SINR,
- determining a throughput.

Fig. 1

1000

CB

20

Fig. 2a

CB

10

CB

Fig. 2b

CB

CB_3

$$\begin{pmatrix} w_{1,1} & \cdots & w_{1,m} \\ \vdots & \ddots & \vdots \\ w_{n,1} & \cdots & w_{n,m} \end{pmatrix}$$

CB_2

CB_1

Fig. 3a

CB_opt

PM_ideal

10a

Δ

Fig. 3b

200

210

212

214

216

90

100

110

120

EP 2 768 154 A1

Fig. 4

14

# EP 2 768 154 A1

**European Patent Office**
Europäisches Patentamt
European Patent Office
Office européen des brevets

## EUROPEAN SEARCH REPORT

**Application Number**

EP 13 29 0029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/085082 A2 (INTERDIGITAL PATENT HOLDINGS [US]; PORAT RON [US]; PIETRASKI PHILIP J) 14 July 2011 (2011-07-14) <br> * abstract * <br> * paragraphs [0038] - [0082] * <br> * figures 1c, 2 * <br> ----- | 1-14 | INV. <br> H04B7/04 <br> H04B7/06 |
| X | WO 2011/132727 A1 (NTT DOCOMO INC [JP]; TAOKA HIDEKAZU [DE]; KUSUME KATSUTOSHI [DE]) 27 October 2011 (2011-10-27) <br> * abstract * <br> & EP 2 562 951 A1 (NTT DOCOMO INC [JP]) 27 February 2013 (2013-02-27) <br> * paragraphs [0061] - [0069] * <br> * figures 9, 10 * <br> ----- | 1-14 | |
| X | EP 2 357 767 A1 (RESEARCH IN MOTION LTD [CA]) 17 August 2011 (2011-08-17) <br> * abstract * <br> * paragraphs [0028] - [0039] * <br> * figures 1-5 * <br> ----- | 1-14 | |

**TECHNICAL FIELDS SEARCHED (IPC)**

H04B
H04L

The present search report has been drawn up for all claims

| Place of search | Date of completion of the search | Examiner |
|---|---|---|
| Munich | 20 June 2013 | Helms, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 768 154 A1

## ANNEX TO THE EUROPEAN SEARCH REPORT
## ON EUROPEAN PATENT APPLICATION NO.

EP 13 29 0029

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2013

| Patent document cited in search report | | Publication date | Patent family member(s) | | Publication date |
|---|---|---|---|---|---|
| WO 2011085082 | A2 | 14-07-2011 | NONE | | |
| WO 2011132727 | A1 | 27-10-2011 | CN | 102859918 A | 02-01-2013 |
| | | | EP | 2562951 A1 | 27-02-2013 |
| | | | JP | 2011233969 A | 17-11-2011 |
| | | | US | 2013094380 A1 | 18-04-2013 |
| | | | WO | 2011132727 A1 | 27-10-2011 |
| EP 2357767 | A1 | 17-08-2011 | AT | 557503 T | 15-05-2012 |
| | | | CA | 2787987 A1 | 25-08-2011 |
| | | | CN | 102763447 A | 31-10-2012 |
| | | | EP | 2357767 A1 | 17-08-2011 |
| | | | EP | 2442509 A1 | 18-04-2012 |
| | | | WO | 2011100822 A1 | 25-08-2011 |

EPO FORM P0459

For more details about this annex : see Official Journal of the European Patent Office, No. 12/82

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- 3GPP TS 36.211. May 2009